# EUROPEAN PATENT SPECIFICATION

(11) **EP 1 606 209 B1**
(45) Date of publication and mention of the grant of the patent: **07.03.2012**
(21) Application number: 02794430.5
(22) Date of filing: 30.12.2002
(51) Int. Cl.: B66B 13/26, E05F 15/06

(54) **OPTICALLY SYNCHRONIZED SAFETY DETECTION DEVICE FOR ELEVATOR SLIDING DOORS**
OPTISCH SYNCHRONISIERTE SICHERHEITSMELDEVORRICHTUNG FÜR AUFZUGSSCHIEBETÜREN
DETECTEUR DE SECURITE A SYNCHRONISATION OPTIQUE POUR PORTES COULISSANTES D'ASCENSEUR

(43) Date of publication of application: 21.12.2005
(73) Proprietor: Otis Elevator Company, Farmington, CT 06032 (US)
(72) Inventor: PUSTELNIAK, Richard, Tuscan, Arizona 85716 (US)
(74) Representative: Klunker . Schmitt-Nilson . Hirsch
(86) International application number: PCT/US2002/041516
(87) International publication number: WO 2004/058622

(56) References cited:
- WO-A1-82/02787
- WO-A2-96/08734
- US-A- 4 410 884
- US-A- 4 823 010
- US-A- 5 149 921
- US-A- 5 900 589

## Description

### BACKGROUND OF THE INVENTION

### (1) Field of the Invention

The present invention relates to an optically synchronized safety detection system for sliding elevator doors and a method for operating such a system.

### (2) Description of Related Art

Many elevator door detection systems currently in operation consist of a control unit, an emitter door unit (array of IR emitters), and a detector door unit (an array of IR receivers). Door unit power regulation and supply, as well as control and synchronization, functions are provided by the controller unit via multi-wire cable assemblies. Although such systems have proven to be quite reliable, the systems produced using this approach cannot are often times quite expensive to construct and to operate.

Cost analysis of these current detection systems reveal that, if they could be produced without separate controller units, overall detection system cost could be reduced by more than 60%. However, in order to remove the need for a controller unit, its functions need to be handled by the door units. Due to door unit size constraints, control and power supply functions could not simply be moved to a single door unit.

Cost reductions can be realized by eliminating the need for electrical communication between the door units, simplifying the interconnect cables and eliminating the need for buffering and related protection circuitry. However, scanning the elevator entrance and using separate arrays of emitters and detectors requires a complex scanning sequence. The operations or functions performed by the emitter array and the detector array must be carefully coordinated and synchronized. Since a one-way form of communication already exists between emitter door units and detector door unit, in.the form of energy used to scan the elevator entrance, it would prove advantageous to devise a methodology whereby such energy can be used to perform the necessary communication between the door units. However, the scanning energy produced by the emitter unit is not continuous from any individual source, thus posing a problem of synchronizing the emitter and receiver units.

What is therefore needed is an elevator door detection system wherein power supply and control functions are distributed to each door unit and customized for the individual needs of each system. It would further prove advantageous to eliminate the need for electrical communication between the door units.

### SUMMARY OF THE INVENTION

Accordingly, it is an object of the present invention to provide an optically synchronized safety detection system for sliding elevator doors and a method for operating such a system.

In accordance with the present invention, a safety detection system for a door apparatus comprises a plurality of linearly disposed emitters each adapted to be activated to emit an energy beam, and a plurality of linearly disposed receivers each corresponding to one of the plurality of emitters and adapted to receive one of the energy beams from the corresponding one of the plurality of emitters, wherein each of the plurality of receivers is singularly activated prior to receiving the energy beam in accordance with a scan sequence, wherein each of the plurality of emitters is singularly activated to emit the energy beam in accordance with the scan sequence, and wherein each activated one of the plurality of receivers upon receiving the energy beam deactivates and a next one of the plurality of receivers in the scan sequence is activated.

In accordance with the present invention, a method of performing safety detection in a door apparatus comprises the steps of linearly disposing a plurality of emitters along a first vertical surface, linearly disposing a plurality of receivers each corresponding to one of the plurality of emitters along a second vertical surface, activating one of the plurality of receivers in accordance with a scan sequence, activating one of the plurality of emitters in accordance with the scan sequence to emit an energy beam, receiving the energy beam with the activated one of the plurality of receivers, deactivating the activated one of the plurality of receivers in response to receiving the energy beam, and activating a subsequent one of the plurality of receivers as defined in the scan sequence, activating a subsequent one of the plurality of emitters in accordance with the scan sequence to emit the energy beam, and repeating steps e through f until each of the plurality of emitters and each of the plurality of receivers is activated in accordance with the scan sequence.

### BRIEF DESCRIPTION OF THE DRAWINGS

- FIG. 1: A diagram of the safety detection system of the present invention.
- FIG. 2: A diagram of the safety detection system of the present invention after the detection of a beam break.

### DETAILED DESCRIPTION OF THE PREFERRED EMBODIMENT(S)

The present invention herein describes a two dimensional detector for an elevator door unit wherein power supply and control functions are distributed to each door unit and wherein there has been eliminated the need for electrical communication between the door units.

The apparatus of the present invention consists of a series of emitters located on the leading edge of a first door, and a series of receivers located on the leading edge of the second door. A first controller controls the firing sequence of the emitters, and a second controller controls the activation of the individual receivers for detecting the beam or beams emitted by the emitters. The second controller also provides a signal to the door controller to reverse the doors in response to a loss of signal or detected interruption in an emitted beam.

In the event of one such loss of signal or detected interruption, the doors will not close again until a complete scan has been performed without loss of signal or detected beam interruption. The scan pattern for the emitters and receivers is controlled independently of each other. The emitters are turned on and off in a known scan pattern, while the detectors are enabled to receive in a pattern matching that of the emitters, but using the energy detected from the emitters to synchronize the scan pattern of the detectors to the pattern of the emitters. In this manner, as described more fully below, there is eliminated the need for any kind of electrical connection between the emitter array and the detector array.

With reference to Figure 1 there is illustrated the elevator door detection system of the present invention. Along a leading edge 25 of a first door 19 there is vertically arranged a plurality of emitters 11. Opposite the emitters 11 and vertically arranged along a leading edge 27 of a second door 21 is a plurality of receivers 17. In a preferred embodiment, and as described below, each emitter 11 has a corresponding receiver 15 located horizontally from the emitter. Each corresponding pair comprising a receiver 17 and an emitter 11 form an emitter/receiver pair. A representation of the energy signal 23 produced by a single emitter 11 is shown. Note that the energy signal 23 emitted from a single emitter contacts more than one receiver 17.

A single emitter 11 is turned on to form an active emitter 13 and a receiver 17 directly across from the emitter, active receiver 15, is turned on and remains on until it detects an energy signal 23. The active receiver 15 is then disabled and the next receiver in the scan sequence is enabled to receive. As used herein, "scan sequence" refers to the order in which the emitters 11 and receivers 17 are activated in the course of completing a normal or diagnostic scan. When the next emitter 11 in the sequence is turned on to become an active emitter 13, and the light path to the active receiver 15 is not blocked, the received energy signal 23 triggers the next receiver 17 in the sequence to be activated, and so on. The pattern will be repeated for each emitter/receiver pair. The scan sequence may be hard wired into each array of receivers 17 and emitters 11, or preferably, stored in separate controllers 31, 33 one each associated with the first door 19 and the second door 21.

As can be seen, the activated emitters 13 produce a fairly tight pattern of light comprising energy signal 23 that can illuminate more than one receiver 17 at a time. Therefore, in a preferred embodiment, the scan sequence used to turn on and off the emitters 11 is one such that no two sequentially activated emitters 13 illuminate the same receivers 17.

One exemplary scan sequence to achieve this goal is described as follows although various other scan sequences may be used to effectively carry out the object of the present invention. In the present example, there is illustrated twenty-six emitters 11 (emitters one through twenty-six arranged top to bottom). Assume a scan sequence wherein the twenty-six emitters (emitter 11 one being at the top of first door 19 and emitter 11 twenty-six being at the bottom of first door 19) are activated in the following sequence: one, fourteen, two, fifteen, three, sixteen, and continuing to thirteen, twenty-six. Likewise, the receivers 17 are activated in the same sequence. In the present illustrated example, energy signal 23 contacts the active receiver 15 horizontal from active emitter 13 as well as the five receivers on each side. However, as a result of the exemplary scan sequence described herein, subsequent activated receivers will not incorrectly receive an energy signal 23 from the active emitter 13.

This is evident from the following. As illustrated, active emitter 13 sixteen is emitting energy signal 23 which is sensed by active receiver 15 sixteen as well as receivers 17 eleven through fifteen and seventeen through twenty-one. After receiving the emitted energy signal 23, the next receiver 17 is activated to become active receiver 15, in this case active receiver 15 four. Note that receiver 17 four is not included in receivers 17 eleven through twenty-one and is therefore not effected by the emitted energy signal 23.

Each active receiver 15 waits a limited, predefined period of time for energy from the corresponding active emitter 13, or one whose energy signal 23 can illuminate the active receiver 15. As soon as emitted energy is detected by the currently active receiver 15, a connection for that receiver (or beam) is logged, and the next receiver 17 in the scanning sequence is made the active receiver 15. If emitted energy is not detected within a certain maximum waiting period (long enough to ensure that expected energy should have arrived), a beam break is logged, a reversal signal is sent to the door operator 37 and the system 10 parks (activates the "park" beam/receiver 21, which, in this example, is the bottom receiver 17), as shown in figure 2. In a preferred embodiment, upon receipt of a reversal signal, the doors 19, 21 are opened.

The system 10 then waits for "first energy" to be received by the park receiver 21. When energy is detected, a sync state is considered "primed", and the top receiver is activated, as shown in figure 2. When the top receiver detects energy, a synchronized state has been established between the emitter unit and the detector and normal scanning resumes. The synchronized state can be guaranteed to have been established, because, even though the bottom or park receiver 20 may receive energy from an emitter 11 not actually corresponding to the park receiver 20, by the time energy is received by the bottom/park receiver 20, the emitter sequence has progressed far enough to guarantee that no energy can be received by the top receiver until the emitter unit has restarted its scan sequence from the top.

Once a synchronized state has been established between emitter and receiver arrays the normal scanning sequence begins. If the entire scanning sequence is successfully scanned, without beam break detection, the reversal signal to the door operator is cleared, and normal scanning continues as previously described.

As can be seen in the figures and as noted above, each emitter 11 can illuminate a number of receivers 17. As a result, each emitter in the scanning sequence must have enough separation from the emitter before it in the sequence, or the next one in the sequence, such that no detector can "see" the energy from any two consecutive emitters in the sequence. Also, if while the receiver is parked, waiting to establish or reestablish sync, energy is detected from an incorrect emitter 11 in the sequence (i.e., an emitter not directly across from the park receiver 20), the scanning sequence is designed so that at least one (falsely composed) beam will "break" before the entire scanning sequence has been completed, causing a "re-park and sync" operation, while the previously existing reversal signal is maintained in the active state. One preferred method of accomplishing this is to add to the scan sequence described above a perturbation. For example, after finishing the scan sequence described above as "... twelve, twenty-five, thirteen, twenty-six", there may be appended a short additional sequence such as "one, twenty-six, one, twenty-six".

In a preferred embodiment, additional false sync loop perturbations are added to the scan sequence to eliminate the possibility of an endless loop. Specifically, it is important to avoid the condition wherein a "false" sync situation "breaks" leading directly into another "false" sync situation which "breaks", leading to some previously entered "false" sync situation, resulting in "false" sync loops and an inability to establish a true sync. In such a case, the reversal signal will never be deactivated and the doors will hang in the open position, due to a continuous "obstructed" indication from the detection system 10.

While described with reference to a detection system 10 comprising two doors 19, 21, the present invention is not so limited. For example, the present invention might be directed to a detection system 10 comprising a single door with a leading edge in contact, in a closed position, with a vertical wall along which may be vertically disposed the plurality of receivers 17 or emitters 11 of the present invention.

It is apparent that there has been provided in accordance with the present invention an optically synchronized safety detection system for sliding elevator doors which fully satisfies the objects, means, and advantages set forth previously herein.

## Claims

1. A safety detection system for a door apparatus comprising:
a plurality of linearly disposed emitters (11) each adapted to be activated to emit an energy beam (23); and
a plurality of linearly disposed receivers (17) each corresponding to one of said plurality of emitters (11) and adapted to receive one of said energy beams (23) from said corresponding one of said plurality of emitters (11);
wherein each of said plurality of receivers (17) is singularly activated prior to receiving said energy beam (23) in accordance with a scan sequence, wherein each of said plurality of emitters (11) is singularly activated to emit said energy beam (23) in accordance with said scan sequence, and wherein each activated one of said plurality of receivers (17) upon receiving said energy beam (23) deactivates and a next one of said plurality of receivers (17) in said scan sequence is activated.

2. The safety detection system of claim 1 wherein said linearly disposed plurality of emitters (11) is disposed upon a leading edge (25, 27) of a door (19, 21).

3. The safety detection system of claim 1 wherein said linearly disposed plurality of emitters (11) is disposed vertically.

4. The safety detection system of claim 3 wherein said door (19, 21) comprises an elevator door (19, 21).

5. The safety detection system of claim 1 wherein said linearly disposed plurality of receivers (17) is disposed upon a leading edge (25, 27) of a door (19, 21).

6. The safety detection system of claim 5 wherein said linearly disposed plurality of receivers (17) is disposed vertically.

7. The safety detection system of claim 4 wherein said door (19, 21) comprises an elevator door (19, 21).

8. The safety detection system of claim 1 wherein said energy beam (23) comprises IR light.

9. The safety detection system of claim 1 wherein each of said plurality of receivers (17) is adapted to wait for a predefined period of time for receiving said energy beam (23).

10. The safety detection system of claim 9 wherein each of said plurality of receivers (17) is adapted to identify a beam break when said energy beam (23) is not received within said predefined period.

11. A method of performing safety detection in a door apparatus comprising the steps of:
a) linearly disposing a plurality of emitters (11) along a first vertical surface;
b) linearly disposing a plurality of receivers (17) each corresponding to one of said plurality of emitters (11) along a second vertical surface;
c) activating one of said plurality of receivers (17) in accordance with a scan sequence;
d) activating one of said plurality of emitters (11) in accordance with said scan sequence to emit an energy beam (23);
e) receiving said energy beam (23) with said activated one of said plurality of receivers (17), deactivating said activated one of said plurality of receivers (17) in response to receiving said energy beam (23), and activating a subsequent one of said plurality of receivers (17) as defined in said scan sequence ;
f) activating a subsequent one of said plurality of emitters (11) in accordance with said scan sequence to emit said energy beam (23) ; and
g) repeating steps e through f until each of said plurality of emitters (11) and each of said plurality of receivers (17) is activated in accordance with said scan sequence.

12. The method of claim 11 wherein linearly disposing said plurality of emitters (11) along a first vertical surface comprises disposing said plurality of emitters (11) along an edge (25, 27) of an elevator door (19, 21).

13. The method of claim 11 wherein linearly disposing said plurality of receivers (17) along a said vertical surface comprises disposing said plurality of emitters (11) along an edge (25, 27) of an elevator door (19, 21).

14. The method of claim 11 comprising the additional step of constructing said scan sequence to permit synchronization of said plurality of emitters (11) and said plurality of receivers (17).

15. The method of claim 11 comprising the additional steps of: h) waiting for a predefined period of time after activating one of said plurality of receivers (17) for said receipt of said energy beam (23) ; and
i) identifying a beam break if said activated one of said plurality of receivers (17) fails to receive said energy beam (23) within said predefined period of time.

16. The method of claim 15 comprising the additional step of opening an elevator door (19, 21) after identifying said beam (23) break.

17. The safety detection system of claim 1, further comprising a series of emitters (11) located on a first door (19); a series of receivers (17) located on a second door (21);
first means for controlling a firing sequence for the emitters (11);
second means for activating said receivers (17) for detecting beams (23) emitted by said emitters (11);
third means for controlling said door (19, 21);
wherein said second means is configured to provide a signal to the third means to reverse the door (19, 21) in response to at least one of a loss of signal and a detected beam (23) interruption.

## Patentansprüche

1. Sicherheitsdetektionssystem für eine Türvorrichtung, aufweisend:
eine Mehrzahl von linear angeordneten Emittern (11), die jeweils zum Emittieren eines Energiestrahls (23) aktiviert werden können; und
eine Mehrzahl von linear angeordneten Empfängern (17), die jeweils einem der Mehrzahl von Emittern (11) entsprechen und dazu ausgebildet sind,
einen der Energiestrahlen (23) von dem entsprechenden der Mehrzahl von Emittern (11) zu empfangen;
wobei jeder der Mehrzahl von Empfängern (17) vor dem Empfangen des Energiestrahls (23) in Abhängigkeit von einer Abtastsequenz einzeln aktiviert wird, wobei jeder der Mehrzahl von Emittern (11) zum Emittieren des Energiestrahls (23) in Abhängigkeit von der Abtastsequenz einzeln aktiviert wird, und wobei jeder aktivierte der Mehrzahl von Empfängern (17) bei Empfang des Energiestrahls (23) deaktiviert wird und ein nächster in der Mehrzahl von Empfängern (17) in der Abtastsequenz aktiviert wird.

2. Sicherheitsdetektionssystem nach Anspruch 1,
wobei die linear angeordnete Mehrzahl von Emittern (11) an einem vorderen Rand (25, 27) einer Tür (19, 21) angeordnet ist.

3. Sicherheitsdetektionssystem nach Anspruch 1,
wobei die linear angeordnete Mehrzahl von Emittern (11) vertikal angeordnet ist.

4. Sicherheitsdetektionssystem nach Anspruch 3,
wobei die Tür (19, 21) eine Aufzugtür (19, 21) umfasst.

5. Sicherheitsdetektionssystem nach Anspruch 1,
wobei die linear angeordnete Mehrzahl von Empfängern (17) an einem vorderen Rand (25, 27) einer Tür (19, 21) angeordnet ist.

6. Sicherheitsdetektionssystem nach Anspruch 5,
wobei die linear angeordnete Mehrzahl von Empfängern (17) vertikal angeordnet ist.

7. Sicherheitsdetektionssystem nach Anspruch 4,
wobei die Tür (19, 21) eine Aufzugtür (19, 21) umfasst.

8. Sicherheitsdetektionssystem nach Anspruch 1,
wobei der Energiestrahl (23) IR-Licht aufweist.

9. Sicherheitsdetektionssystem nach Anspruch 1,
wobei jeder der Mehrzahl von Empfängern (17) dazu ausgebildet ist, eine vorbestimmte Zeitdauer auf den Empfang des Energiestrahls (23) zu warten.

10. Sicherheitsdetektionssystem nach Anspruch 9,
wobei jeder der Mehrzahl von Empfängern (17) dazu ausgebildet ist, eine Strahlunterbrechung zu identifizieren, wenn der Energiestrahl (23) nicht innerhalb der vorbestimmten Zeitdauer empfangen wird.

11. Verfahren zum Ausführen einer Sicherheitsfeststellung bei einer Türvorrichtung, wobei das Verfahren folgende Schritte aufweist:
a) lineares Anordnen einer Mehrzahl von Emittern (11) entlang einer ersten vertikalen Fläche;
b) lineares Anordnen einer Mehrzahl von Empfängern (17), die jeweils einem der Mehrzahl von Emittern (11) entsprechen, entlang einer zweiten vertikalen Fläche;
c) Aktivieren von einem der Mehrzahl von Empfängern (17) in Abhängigkeit von einer Abtastsequenz;
d) Aktivieren von einem der Mehrzahl von Emittern (11) in Abhängigkeit von der Abtastsequenz zum Emittieren eines Energiestrahls (23);
e) Empfangen des Energiestrahls (23) mit dem aktivierten Empfänger der Mehrzahl von Empfängern (17), Deaktivieren des aktivierten Empfängers der Mehrzahl von Empfängern (17) ansprechend auf das Empfangen des Energiestrahls (23) und Aktivieren eines nachfolgenden der Mehrzahl von Empfängern (17) gemäß Definition in der Abtastsequenz;
f) Aktivieren eines nachfolgenden der Mehrzahl von Emittern (11) in Abhängigkeit von der Abtastsequenz zum Emittieren des Energiestrahls (23); und
g) Wederholen der Schritte e) bis f), bis jeder der Mehrzahl von Emittern (11) und der Mehrzahl von Empfängern (17) in Abhängigkeit von der Abtastsequenz aktiviert ist.

12. Verfahren nach Anspruch 11,
wobei das lineare Anordnen der Mehrzahl von Emittern (11) entlang einer ersten vertikalen Fläche das Anordnen der Mehrzahl von Emittern (11) entlang eines Rands (25, 27) einer Aufzugtür (19, 21) beinhaltet.

13. Verfahren nach Anspruch 11,
wobei das lineare Anordnen der Mehrzahl von Empfängern (17) entlang einer vertikalen Fläche das Anordnen der Mehrzahl von Emittern (11) entlang eines Rands (25, 27) einer Aufzugtür (19, 21) beinhaltet.

14. Verfahren nach Anspruch 11,
das den zusätzlichen Schritt aufweist, in dem die Abtastsequenz erzeugt wird, um eine Synchronisierung der Mehrzahl von Emittern (11) und der Mehrzahl von Empfängern (17) zu ermöglichen.

15. Verfahren nach Anspruch 11,
das folgende zusätzliche Schritte aufweist:
h) Warten für eine vorbestimmte Zeitdauer auf den Empfang des Energiestrahls (23) nach dem Aktivieren von einem der Mehrzahl von Empfängern (17); und
i) identifizieren einer Strahlunterbrechung, wenn der aktivierte Empfänger der Mehrzahl von Empfängern (17) den Energiestrahl (23) nicht innerhalb der vorbestimmten Zeitdauer empfängt.

16. Verfahren nach Anspruch 15,
das den zusätzlichen Schritt beinhaltet, in dem eine Aufzugtür (19, 21) nach dem Identifizieren der Unterbrechung des Strahls (23) geöffnet wird.

17. Sicherheitsdetektionssystem nach Anspruch 1,
das weiterhin Folgendes aufweist:
eine Reihe von Emittern (11), die sich an einer ersten Tür (19) befinden;
eine Reihe von Empfängern (17), die sich an einer zweiten Tür (21) befinden;
eine erste Einrichtung zum Steuern einer Abgabeabfolge für die Emitter (11);
eine zweite Einrichtung zum Aktivieren der Empfänger (17), um von den Emittern (11) emittierte Strahlen (23) zu detektieren;
eine dritte Einrichtung zum Steuern der Tür (19, 21);
wobei die zweite Einrichtung dazu ausgebildet ist, der dritten Einrichtung ein Signal zum Bewegen der Tür (19, 21) in der umgekehrten Richtung zuzuführen, und zwar ansprechend auf mindestens eines von einem Signalverlust und einer Unterbrechung eines detektierten Strahls (23).

## Revendications

1. Système de détection de sécurité pour un appareil à porte comprenant :
une pluralité d'émetteurs disposés linéairement (11), chacun d'eux étant apte à être activé pour émettre un faisceau d'énergie (23) ; et
une pluralité de récepteurs disposés linéairement (17), chacun d'eux correspondant à l'un de ladite pluralité d'émetteurs (11) et étant apte à recevoir l'un desdits faisceaux d'énergie (23) dudit un correspondant de ladite pluralité d'émetteurs (11) ;
dans lequel chacun de ladite pluralité de récepteurs (17) est individuellement activé avant de recevoir ledit faisceau d'énergie (23) en fonction d'une séquence de balayage, dans lequel chacun de ladite pluralité d'émetteurs (11) est individuellement activé pour émettre ledit faisceau d'énergie (23) en fonction de ladite séquence de balayage, et dans lequel chaque récepteur activé de ladite pluralité de récepteurs (17) à la réception dudit faisceau d'énergie (23) se désactive et un récepteur suivant de ladite pluralité de récepteurs (17) dans ladite séquence de balayage est activé.

2. Système de détection de sécurité selon la revendication 1, dans lequel ladite pluralité d'émetteurs disposés linéairement (11) est disposée sur un bord avant (25, 27) d'une porte (19, 21).

3. Système de détection de sécurité selon la revendication 1, dans lequel ladite pluralité d'émetteurs disposés linéairement (11) est disposée verticalement.

4. Système de détection de sécurité selon la revendication 3, dans lequel ladite porte (19, 21) comprend une porte d'ascenseur (19, 21).

5. Système de détection de sécurité selon la revendication 1, dans lequel ladite pluralité de récepteurs disposés linéairement (17) est disposée sur un bord avant (25, 27) d'une porte (19, 21).

6. Système de détection de sécurité selon la revendication 5, dans lequel ladite pluralité de récepteurs disposés linéairement (17) est disposée verticalement.

7. Système de détection de sécurité selon la revendication 4, dans lequel ladite porte (19, 21) comprend une porte d'ascenseur (19, 21).

8. Système de détection de sécurité selon la revendication 1, dans lequel ledit faisceau d'énergie (23) comprend une lumière infrarouge.

9. Système de détection de sécurité selon la revendication 1, dans lequel chacun de ladite pluralité de récepteurs (17) est apte à patienter une période de temps prédéfinie pour recevoir ledit faisceau d'énergie (23).

10. Système de détection de sécurité selon la revendication 9, dans lequel chacun de ladite pluralité de récepteurs (17) est apte à identifier une rupture de faisceau lorsque ledit faisceau d'énergie (23) n'est pas reçu au cours de ladite période prédéfinie.

11. Procédé d'exécution de détection de sécurité dans un appareil à porte comprenant les étapes de :
a) la disposition linéaire d'une pluralité d'émetteurs (11) le long d'une première surface verticale ;
b) la disposition linéaire d'une pluralité de récepteurs (17) correspondant chacun à l'un de ladite pluralité d'émetteurs (11) le long d'une deuxième surface verticale ;
c) l'activation de l'un de ladite pluralité de récepteurs (17) en fonction d'une séquence de balayage ;
d) l'activation de l'un de ladite pluralité d'émetteurs (11) en fonction de ladite séquence de balayage pour émettre un faisceau d'énergie (23) ;
e) la réception dudit faisceau d'énergie (23) avec ledit récepteur activé de ladite pluralité de récepteurs (17), la désactivation dudit récepteur activé de ladite pluralité de récepteurs (17) en réponse à la réception dudit faisceau d'énergie (23), et l'activation d'un récepteur suivant de ladite pluralité de récepteurs (17) tel que défini dans ladite séquence de balayage ;
f) l'activation d'un émetteur suivant de ladite pluralité d'émetteurs (11) en fonction de ladite séquence de balayage pour émettre ledit faisceau d'énergie (23) ; et
g) la répétition des étapes e à f jusqu'à ce que chacun de ladite pluralité d'émetteurs (11) et chacun de ladite pluralité de récepteurs (17) soient activés en fonction de ladite séquence de balayage.

12. Procédé selon la revendication 11, dans lequel la disposition linéaire de ladite pluralité d'émetteurs (11) le long d'une première surface verticale comprend la disposition de ladite pluralité d'émetteurs (11) le long d'un bord (25, 27) d'une porte d'ascenseur (19, 21).

13. Procédé selon la revendication 11, dans lequel la disposition linéaire de ladite pluralité de récepteurs (17) le long d'une dite surface verticale comprend la disposition de ladite pluralité d'émetteurs (11) le long d'un bord (25, 27) d'une porte d'ascenseur (19, 21).

14. Procédé selon la revendication 11, comprenant l'étape supplémentaire de la construction de ladite séquence de balayage pour permettre la synchronisation de ladite pluralité d'émetteurs (11) et de ladite pluralité de récepteurs (17).

15. Procédé selon la revendication 11, comprenant les étapes supplémentaires de :
h) l'attente pendant une période de temps prédéfinie après l'activation de l'un de ladite pluralité de récepteurs (17) pour ladite réception dudit faisceau d'énergie (23) ; et
i) l'identification d'une rupture de faisceau si ledit récepteur activé de ladite pluralité de récepteurs (17) ne parvient pas à recevoir ledit faisceau d'énergie (23) au cours de ladite période de temps prédéfinie.

16. Procédé selon la revendication 15, comprenant l'étape supplémentaire de l'ouverture d'une porte d'ascenseur (19, 21) après l'identification d'une rupture dudit faisceau (23).

17. Système de détection de sécurité selon la revendication 1, comprenant en outre :
une série d'émetteurs (11) situés sur une première porte (19) ;
une série de récepteurs (17) situés sur une deuxième porte (21) ;
un premier moyen pour commander une séquence d'amorçage pour les émetteurs (11) ;
un deuxième moyen pour activer lesdits récepteurs (17) pour détecter des faisceaux (23) émis par lesdits émetteurs (11) ;
un troisième moyen pour commander ladite porte (19, 21) ;
dans lequel ledit deuxième moyen est configuré pour fournir un signal au troisième moyen pour inverser la porte (19, 21) en réponse à au moins l'une d'une perte de signal et d'une interruption de faisceau (23) détectée.
